# EUROPÄISCHE PATENTSCHRIFT

(11) **EP 0 717 243 B1**
(45) Veröffentlichungstag und Bekanntmachung des Hinweises auf die Patenterteilung: **17.06.1998**
(21) Anmeldenummer: 95118111.4
(22) Anmeldetag: 17.11.1995
(51) Int. Cl.: F24H 8/00, F28B 9/08

(54) **Neutralisationsgerät**
Neutralisation device
Appareil de neutralisation

(30) Priorität: 19.11.1994 DE 9418512 U
(43) Veröffentlichungstag der Anmeldung: 19.06.1996
(73) Patentinhaber: VIESSMANN WERKE GmbH & CO., 35107 Allendorf/Eder (DE)
(72) Erfinder: Böhle, Werner, D-34519 Diemelsee (DE); Koch, Hans, D-35108 Allendorf-Rennertehausen (DE); Burger, Helmut, Prof. Dr.-Ing., D-35216 Biedenkopf-Kombach (DE)
(74) Vertreter: Wolf, Günter, Dipl.-Ing.

(56) Entgegenhaltungen:
- DE-A- 3 427 036
- DE-A- 3 931 746

## Beschreibung

Die Erfindung betrifft ein Neutralisationsgerät zur Behandlung von in wärmetechnischen Geräten, insbesondere Brennwertkesseln anfallenden Kondensatwässern.

Solche Geräte bestehen in der Regel aus einem mit Kondensatzu- und -ablauf und Füllstandssensor versehenen Kondensatsammelbehälter, dem eine von einem Neutralisationsmittelvorratsbehälter ausgehende Neutralisationsmittelzuleitung mit Dosiereinrichtung zugeordnet ist, wobei der Füllstandssensor mit einer die Dosiereinrichtung regelnden Gerätesteuerung verbunden und der Kondensatablauf des Kondensatsammelbehälters mit einem von der Gerätesteuerung betätigbaren Abflußregler versehen ist. Nachfolgend wird der Einfachheit halber auf Brennwertkessel Bezug genommen, obgleich hierbei auch z.B. Abgaswärmetauscher mit entsprechender Brennwertnutzung, die hinter einem konventionellen Kessel als Abgas-Wasser-Wärmetauscher oder in industriellen Bereichen mit Prozeßwärme als wärmetechnische Geräte mit in Betracht zu ziehen sind.

Neutralisationsgeräte der eingangs genannten Art sind bspw. nach der DE-A 39 311 746 bekannt. Mit diesem bekannten Gerät wird das anfallende Kondensat in einem Sammelbehälter gesammelt, in dem auch die Neutralisation mit einem zudosierten Neutralisationsmittel erfolgt und aus dem chargenweise das neutralisierte Kondensat abgeführt wird. Die Zudosierung des Neutralisationsmittels wird dabei durch einen Füllstandsmesser im Kondensatsammelbehälter in Gang gesetzt. Etwa nach dem gleichen Prinzip arbeitet eine Neutralisationseinrichtung an einem Brennwertkessel nach der DE-A 43 39 225. In beiden Fällen erfolgt die Neutralisation im Kondensatsammelbehälter selbst, in dem es somit zu Ausfällreaktionen und damit zur Schlammbildung kommen kann, was, abgesehen von ständiger Wartung, einer Entsorgung bedarf. Abgesehen davon können Ausfällreaktionen von Kondensatinhaltsstoffen zu Verstopfungen und damit zu Funktionsbehinderungen nachgeschalteter Elemente wie Pumpen, Ventile o. dgl. führen.

Der Erfindung liegt die Aufgabe zugrunde, ein Neutralisationsgerät der eingangs genannten Art dahingehend zu verbessern, daß es primär im Kondensatsammelbehälter zu keinen Ausfällreaktionen von Kondensatinhaltsstoffen kommen kann und die Neutralisationsmittelzufuhr in Abhängigkeit vom tatsächlich im Kondensatsammelbehälter vorhandenen Kondensat erfolgt, wobei eine permanente Tropfdosierung, die, wenn sie wirksam werden soll, ein relativ großes und mit Ausfällgefahr verbundenes Puffervolumen verlangt, vermieden werden soll, wie das auch schon bei den Geräten nach den beiden obengenannten Druckschriften DE-A der Fall ist.

Gelöst ist diese Aufgabe nach der Erfindung ganz einfach dadurch, daß die Neutralisationsmittelzufuhrleitung mit ihrer Ausmündung unmittelbar im Bereich der Auslaßöffnung des Kondensatsammelbehälters oder hinter dem Abflußventil in die zur Kanalisation führenden Ablaufleitung des Gerätes einmündend angeordnet ist.

Der wesentliche Unterschied zu vorbekannten Geräten besteht also darin, daß der Kondensatsammelbehälter ausschließlich Sammelbehälter ist, d.h., in diesem keine Neutralisation erfolgt, sondern erst hinter diesem in der Abflußleitung zur Kanalisation. Dies verlangt insofern eine andere Regelung des Gerätes, als hierbei die Zudosierung des Neutralisationsmittels kurz vor oder mit der Öffnung des Kondensatsammelbehälters einsetzt. Außer dem Füllstandsfühler im Kondensatsammelbehälter kann in diesem auch ein pH-Wert-Sensor vorgesehen werden, der ebenfalls über die Gerätesteuerung auf die Dosiereinrichtung geschaltet ist. Ferner ist es ohne weiteres möglich, in der Ablaufleitung in ausreichender Distanz hinter dem Abflußregler ebenfalls einen pH-Wert-Sensor anzuordnen, der die erfolgte Neutralisation bestätigt und der ggf. wiederum über die Gerätesteuerung mit der Brennerschaltung verbunden sein kann, um im Bedarfsfall die Brennerschaltung außer Betrieb zu setzen.

Die Dosierung des Neutralisationsmittels zum abfließenden Kondensatwasser ist so synchronisiert, daß eine Neutralisation des Kondenswassers sichergestellt ist. Dies geschieht über die Gerätesteuerung, die zum einen die Parameter, die für die Neutralisationsmittelmenge bestimmt sind, und zum anderen die Fließzeit des Kondensatwassers erfaßt oder festlegt und damit die Dosiereinrichtung steuert.

Der pH-Wert und die Kondenswasserinhaltsstoffe sind z.B. im Fall von Brennwertheizgeräten stark vom verwendeten Brennstoff (Öl oder Gas) und den verwendeten Anlagenmaterialien, mit denen das Kondenswasser in Berührung kommt, abhängig. Eine weitere entscheidende Abhängigkeit des pH-Wertes besteht vom jeweiligen Betriebszustand des Heizgerätes, d.h. ob betriebsbedingt viel oder wenig Kondensat anfällt. In der Regel variiert der pH-Wert unbehandelter Kondensate zwischen 1,8 und 3,7 für ölbefeuerte Brennwertkessel und zwischen 3,0 und 5,4 für gasbefeuerte Brennwertkessel. Um die Neutralisation einer solchen Bandbreite des pH-Wertes auf einen geforderten pH-Wert im neutralen Bereich, z.B. größer 6,5 anzuheben und die betriebsbedingten Toleranzen des Kessels und der Neutralisationsvorrichtung auszugleichen, wird ein Neutralisationsmittel mit ausreichend großer Neutralisations- und Pufferkapazität zugesetzt. die Pufferkapazität sorgt dafür, daß sich das behandelte Kondenswasser im neutralen Bereich (zwischen pH von ca. 6,5 und 9,5) bewegt, und es nicht zu einer Überneutralisation kommen kann. Je nach Bandbreite der möglichen zu neutralisierenden Säurefrachten sind für den jeweiligen Anwendungsbereich verschiedene Neutralisationsmittel geeignet (z.B. wässrige Lösungen von Natrium- oder Kaliumhydroxid oder von Natrium- oder Kaliumcarbonat). Es sind Neutralisationsmittel in flüssiger oder pulverförmiger Form möglich. Die Dosierung des Neutralisationsmittels kann sowohl kontinuierlich als auch intermittierend erfolgen.

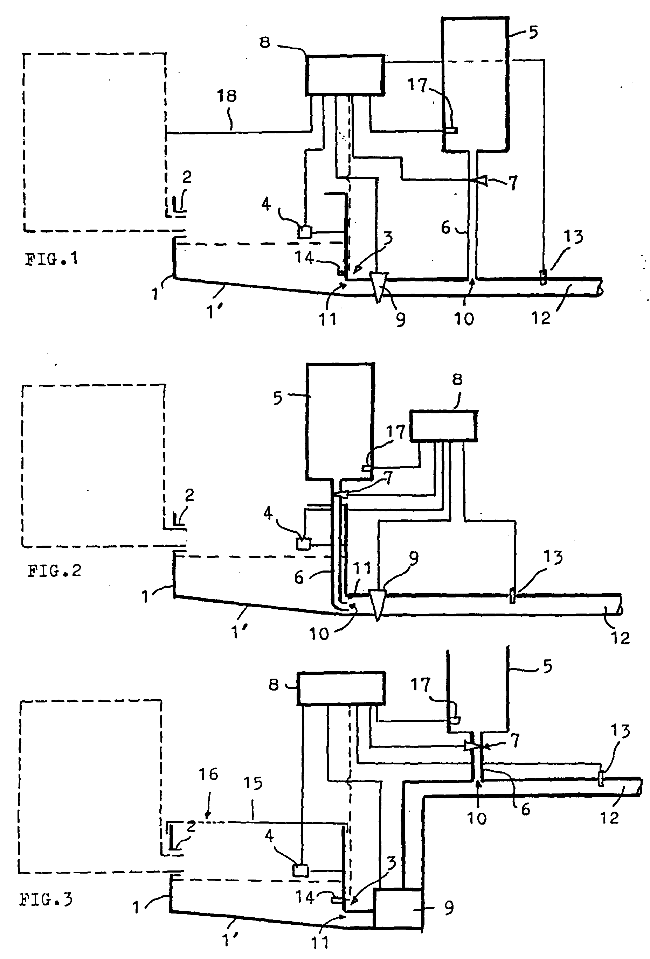

Das erfindungsgemäße Neutralisationsgerät wird nachfolgend anhand der zeichnerischen Darstellung von Ausführungsbeispielen näher erläutert, die stark schematisiert in den Fig. 1 bis 3 veranschaulicht sind.

Das Neutralisationsgerät besteht in bekannter Weise aus einem mit Kondensatzu- und -ablauf 2, 3 und Füllstandssensor 4 versehenen Kondensatsammelbehälter 1, dem eine von einem Neutralisationsmittelvorratsbehälter 5 ausgehende Neutralisationsmittelzuleitung 6 mit Dosiereinrichtung 7 zugeordnet ist, wobei der Füllstandssensor 4 mit einer die Dosiereinrichtung 7 regelnden Gerätesteuerung 8 verbunden und der Kondensatablauf 3 des Kondensatsammelbehälters 1 mit einem von der Gerätesteuerung 8 betätigbaren Abflußregler 9 versehen ist,

Für ein solches Gerät ist nun wesentlich, daß die Neutralisationsmittelzuleitung 6 mit ihrer Ausmündung 10 unmittelbar im Bereich der Auslaßöffnung 11 des Kondensatsammelbehälters 1 oder hinter dem Abflußventil 9 in die zur Kanalisation führenden Ablaufleitung 12 des Gerätes einmündend angeordnet ist.

Die drei dargestellten Ausführungsbeispiele unterscheiden sich dadurch, daß gemäß Fig. 1 die Neutralisationsmittelzuleitung 6 außerhalb des Kondensatsammelbehälters 1 hinter dem Abflußregler 9 (hier bspw. Magnetventil) an die Ablaufleitung 12 angeschlossen ist, während bei der Ausführungsform nach Fig. 2 die Neutralisationsmittelzuleitung 6 im Kondensatsammelbehälter 1 sitzt, wobei es aber wesentlich ist, daß deren Ausmündung 10, vorzugsweise bei, wie dargestellt, abgebogenem Ende, direkt in die Auslaßöffnung 11 weist. Die Ausführungsform nach Fig. 3 schließlich entspricht im wesentlichen der gemäß Fig. 1 mit dem Unterschied, daß hierbei der Abflußregler 9 eine Pumpe ist.

Bevorzugt ist der Boden 1' des Kondensatsammelbehälters 1 zur Auslaßöffnung 11 hin abfallend geneigt ausgebildet, so daß etwaige in den Kondensatsammelbehälter gelangte Feststoffpartikelchen immer und sofort, ohne sich ansammeln zu können, mit ausgespült werden. Aus vorstellbaren Gründen werden die Kondensatsammelbehälter 1 solcher Geräte abgedeckelt, was bei Entleerung zu Unterdruck im Behälter 1 führen kann, der bei bisher üblicher Neutralisationsmittelzugabe von oben auf das Kondensat keine Rolle spielt. Im vorliegenden Zusammehang, d.h., eine Neutralisationsmittelzugabe direkt in das Kondensat, wäre aber bei mit Deckel 15 abgedeckelten Kondensationssammelbehältern 1 ein Unterdruck hinderlich. Vorteilhaft wird also der Deckel 15 mit einer ggf. mit Filter 16 bestückten Öffnung versehen, um damit den Kondensatsammelbehälter 1 belüftbar zu machen (siehe Fig. 3). Wie bisher auch schon, ist im Neutralisationsmittelvorratsbehälter 5 ein ebenfalls mit dem Steuergerät 8 verbundener Füllstandssensor 17 vorgesehen, der über das Steuergerät 8 und die damit verbundene Brennerschaltung (siehe Leitungsanschluß 18) bei Füllstandsmangel den Brenner abschaltet und eine Mangelanzeige akustisch oder optisch auslöst.

Die Ausstattung des Gerätes mit einer Pumpe als Abflußregler 9 (siehe Fig. 3) kommt insbesondere für solche Fälle in Frage, bei denen die Kanalisation höher liegt als das Anordnungsniveau des Neutralisationsgerätes.

Eine Erläuterung oder Darstellung der Logikschaltung im Steuergerät 8 wird als nicht erforderlich angesehen, da in Aufbau und Funktion ohne weiteres vorstellbar.

## Patentansprüche

1. Neutralisationsgerät zur Behandlung von in wärmetechnischen Geräten, insbesondere Brennwertkesseln anfallenden Kondensatwassern, bestehend aus einem mit Kondensatzu- und -ablauf (2, 3) und Füllstandssensor (4) versehenen Kondensatsammelbehälter (1), dem eine von einem Neutralisationsmittelvorratsbehälter (5) ausgehende Neutralisationsmittelzuleitung (6) mit Dosiereinrichtung (7) zugeordnet ist, wobei der Füllstandssensor (4) mit einer die Dosiereinrichtung (7) regelnden Gerätesteuerung (8) verbunden und der Kondensatablauf (3) des Kondensatsammelbehälters (1) mit einem von der Gerätesteuerung (8) betätigbaren Abflußregler (9) versehen ist,
**dadurch gekennzeichnet**,
daß die Neutralisationsmittelleitung (6) mit ihrer Ausmündung (10) unmittelbar im Bereich der Auslaßöffnung (11) des Kondensatsammelbehälters (1) oder hinter dem Abflußregler (9) in die zur Kanalisation führenden Ablaufleitung (12) des Gerätes einmündend angeordnet ist.

2. Neutralisationsgerät nach Anspruch 1,
**dadurch gekennzeichnet**,
daß in der zur Kanalisation führenden Ablaufleitung (12) in Distanz zum Abflußregler (9) ein pH-Wert-Sensor (13) angeordnet und dieser über die Gerätesteuerung (8) mit der Dosiereinrichtung (7) und/oder der Brennerschaltung verbunden ist.

3. Neutralisationsgerät nach Anspruch 1 oder 2,
**dadurch gekennzeichnet**,
daß im Kondensatsammelbehälter (1) außer dem Füllstandssensor (4) ein pH-Wert-Sensor (14) angeordnet ist.

4. Neutralisationsgerät nach einem der Ansprüche 1 bis 3,
**dadurch gekennzeichnet**,
daß der Boden (1') des Kondensatsammelbehälters (1) zu dessen Auslaßöffnung (11) hin abfallend geneigt ist.

5. Neutralisationsgerät nach einem der Ansprüche 1 bis 4,
**dadurch gekennzeichnet**,
daß der Kondensatsammelbehälter (1) abgedeckelt aber belüftbar ausgebildet ist.

6. Neutralisationsgerät nach einem der Ansprüche 1 bis 5,
**dadurch gekennzeichnet**,
daß das Ende der im Kondensatsammelbehälter (1) angeordneten Neutralisationszuleitung (6) mit ihrer Ausmündung (10) in die Auslaßöffnung (11) weisend abgebogen ausgebildet ist.

## Claims

1. A neutralizing system for the treatment of condensate generated in heating systems, in particular, in boilers of the type operated on a condensation basis, comprising a condensate collector (1) provided with condensate supply and discharge means (2,3) and a level sensor (4) associated to which is a feed-in line (6) for supplying neutralizing agent emerging from a neutralizing agent reservoir (5), wherein the feed-in line (6) includes a dosing device (7), with the level sensor (4) being in communication with a system control (8) controlling the dosing device (7), and with the condensate discharge means (3) of the condensate collector (1) being provided with an off-flow control (9) actuable by the system control (8),
characterized in that the line (6) for feeding the neutralizing agent with the mouth (10) thereof is arranged directly in the area of the outlet opening (11) of the condensate collector (1) or behind the off-flow control (9) to terminate in the off-flow conduit (12) of the system leading to the sewage system.

2. A neutralizing system according to claim 1,
characterized in that a pH-value sensor (13) is arranged in the off-flow conduit (12) leading to the sewage system at a distance from the off-flow control (9), and that the same is in communication, through the system control (8), with the dosing means (7) and/or the burner circuit.

3. A neutralizing system according to claims 1 or 2,
characterized in that a pH-value sensor (14) is arranged in the condensate collector (1) in addition to the level sensor (4).

4. A neutralizing system according to any one of claims 1 through 3,
characterized in that the bottom (1') of the condensate collector (1) is sloping toward the outlet opening (11) thereof.

5. A neutralizing system according to any one of claims 1 through 4, characterized in that the condensate collector (1) is shown in lid-covered yet ventilated condition.

6. A neutralizing system according to any one of claims 1 through 5,
characterized in that the end of the conduit (6) for supplying neutralizing agent arranged in the condensate collector (1) with the mouth (10) thereof is shown in bent condition directed toward the outlet opening (11).

## Revendications

1. Appareil de neutralisation pour le traitement d'eaux de condensation produites dans des appareils de technique de chaleur, en particulier de chaudières à condensation, constitué par un collecteur de produit de condensation (1) pourvu d'une arrivée et d'une sortie d'eau de condensation (2, 3) et d'un détecteur de niveau de remplissage (4), collecteur auquel correspond une conduite d'arrivée de substance de neutralisation (6), qui part d'un réservoir de substance de neutralisation (5), avec un dispositif de dosage (7), le détecteur de niveau de remplissage (4) étant relié à une commande de l'appareil (8) qui règle le dispositif de dosage (7) et la sortie de produit de condensation (3) du collecteur de produit de condensation (1) étant pourvue d'une régulateur d'écoulement (9) qui peut être actionné par la commande de l'appareil (8),
caractérisé en ce
que la conduite d'arrivée de la substance de neutralisation (6) est placée avec sa sortie (10) directement dans la zone de l'ouverture de décharge (11) du collecteur de produit de condensation (1) ou derrière la soupape de décharge (9) en débouchant dans la conduite de décharge (12) de l'appareil qui mène à la canalisation d'évacuation.

2. Appareil de neutralisation selon la revendication 1,
caractérisé en ce
qu'un détecteur de valeur de pH (13) est placé dans la conduite de décharge (12) qui mène à la canalisation d'évacuation à une certaine distance du régulateur d'écoulement (9) et que ce détecteur est relié par la commande de l'appareil (8) au dispositif de dosage (7) et/ou au couplage du brûleur.

3. Appareil de neutralisation selon la revendication 1 ou 2,
caractérisé en ce
qu'un détecteur de valeur de pH (14) est placé dans le collecteur de produit de condensation (1) en plus du détecteur de niveau de remplissage (4).

4. Appareil de neutralisation selon l'une des revendications 1 à 3,
caractérisé en ce
que le fond (1') du collecteur de produit de condensation (1) est incliné en descendant vers sa sortie de décharge (11).

5. Appareil de neutralisation selon l'une des revendications 1 à 4,
caractérisé en ce
que le collecteur de produit de condensation (1) est configuré fermant avec un couvercle mais pouvant être aéré.

6. Appareil de neutralisation selon l'une des revendications 1 à 5,
caractérisé en ce
que l'extrémité de la conduite d'amenée de substance de neutralisation (6) placée dans le collecteur de produit de condensation (1) est configurée avec sa sortie (10) recourbée indiquant dans l'ouverture de sortie (10).
